Europäisches Patentamt

European Patent Office

Office européen des brevets

(19)

(11) **EP 1 216 516 B1**

(12) **EUROPÄISCHE PATENTSCHRIFT**

(45) Veröffentlichungstag und Bekanntmachung des Hinweises auf die Patenterteilung:
**12.01.2005 Patentblatt 2005/02**

(51) Int Cl.7: **H04B 1/707**, H04L 27/36

(21) Anmeldenummer: **00969226.0**

(86) Internationale Anmeldenummer:
**PCT/DE2000/003347**

(22) Anmeldetag: **22.09.2000**

(87) Internationale Veröffentlichungsnummer:
**WO 2001/024394 (05.04.2001 Gazette 2001/14)**

(54) **VERFAHREN UND VORRICHTUNG ZUM ERZEUGEN VON SPREIZCODIERTEN SIGNALEN**

METHOD AND DEVICE FOR PRODUCING SPREAD CODED SIGNALS

PROCEDE ET DISPOSITIF DE PRODUCTION DE SIGNAUX CODES PAR ETALEMENT

(84) Benannte Vertragsstaaten:
**AT BE CH CY DE DK ES FI FR GB GR IE IT LI LU MC NL PT SE**

(30) Priorität: **30.09.1999 DE 19947019**

(43) Veröffentlichungstag der Anmeldung:
**26.06.2002 Patentblatt 2002/26**

(73) Patentinhaber:
• **Infineon Technologies AG**
**81669 München (DE)**
Benannte Vertragsstaaten:
**AT BE CH CY DE DK FI FR GB GR IE LI LU MC PT SE**
• **Siemens Aktiengesellschaft**
**80333 München (DE)**
Benannte Vertragsstaaten:
**IT ES NL**

(72) Erfinder:
• **SCHNEIDER, Michael**
**56823 Büchel (DE)**
• **KELLA, Tideya**
**80337 München (DE)**
• **DOETSCH, Markus**
**56072 Koblenz-Rübenach (DE)**
• **JUNG, Peter**
**67697 Otterberg (DE)**

• **PLECHINGER, Jörg**
**80469 München (DE)**
• **SCHMIDT, Peter**
**67158 Ellerstadt (DE)**

(74) Vertreter: **Lange, Thomas, Dr. et al**
**Patentanwälte**
**Lambsdorff & Lange,**
**Dingolfinger Strasse 6**
**81673 München (DE)**

(56) Entgegenhaltungen:
**US-A- 5 838 733**

• **OVESJÖ FREDRIK: "UTRA PHYSICAL LAYER DESCRIPTION FDD PARTS" EUROPEAN TELECOMMUNICATION STANDARD,XX,XX, 25. Juni 1998 (1998-06-25), Seiten 1-41, XP002141421**
• **VANDERAAR M ET AL: "Transmit pulse shaping filters and CORDIC algorithm based precompensation for digital satellite communications" PROCEEDINGS OF THE 39TH MIDWEST SYMPOSIUM ON CIRCUITS AND SYSTEMS (CAT. NO.96CH35995), PROCEEDINGS OF THE 39TH MIDWEST SYMPOSIUM ON CIRCUITS AND SYSTEMS, AMES, IA, USA, 18-21 AUG. 1996, Seiten 1219-1222 vol.3, XP002159076 1996, New York, NY, USA, IEEE, USA ISBN: 0-7803-3636-4**

**Beschreibung**

Die vorliegende Erfindung betrifft ein Verfahren nach dem Oberbegriff des Anspruches 1 sowie eine Vorrichtung nach dem Oberbegriff des Anspruches 11 zum Erzeugen von spreizcodierten Signalen, insbesondere spreizcodierten Mobilfunksignalen.

Die Telekommunikation gehört zu den sich am schnellsten entwickelnden Technologien. Auf dem Gebiet des Mobilfunks wird augenblicklich an der Standardisierung und Entwicklung der sogenannten dritten Mobilfunkgeneration gearbeitet, welche mit den Begriff UMTS (Universal Mobile Telecommunications System) bezeichnet wird und einen weltumspannenden einheitlichen Mobilfunkstandard vorsieht.

Gemäß dem UMTS-Mobilfunkstandard wird als Vielfachzugriffsverfahren die sogenannten CDMA (Code Division Multiple Access)- oder Codemultiplex-Technik eingesetzt. Dabei handelt es sich um ein Vielfachzugriffsverfahren, bei dem allen Teilnehmern des entsprechenden Mobilfunksystems erlaubt wird, gleichzeitig die gesamte zur Verfügung stehende Systembandbreite zu nutzen. Um dennoch Kollisionen zwischen den einzelnen Teilnehmern vermeiden zu können, werden die einzelnen Teilnehmersignale mit unterschiedlichen Codesequenzen versehen, welche somit eine eindeutige Zuordnung der empfangenen Signale ermöglichen. Während dieses Prozesses tritt eine Spreizung der Einzelsignale auf, wodurch sich die Bandbreite vervielfacht, so daß diese Technik auch als Spreizspektrumtechnik bezeichnet wird. Insbesondere werden die zu übertragenden Daten eines Teilnehmers mit einer Codesequenz multipliziert bzw. gespreizt, welche unabhängig von den zu übertragenden Daten ist. Das somit erhaltene bandgespreizte Signal wird anschließend auf einen hochfrequenten Träger aufmoduliert und an einen entsprechenden Empfänger übertragen. Der Empfänger demoduliert dieses bandgespreizte Signal und führt eine De- oder Entspreizung durch, wobei eine zum Sender synchrone Codesequenz verwendet wird. Der Empfänger empfängt zwar nicht nur das gewünschte Signal des Senders, sondern auch zusätzliche Signale von anderen Sendern, die im gleichen Frequenzbereich senden. Durch den Entspreizvorgang wird jedoch sichergestellt, daß nur das Signal entspreizt und in der Bandbreite verringert wird, welches den gleichen und synchronen Spreizcode wie der Empfänger verwendet, so daß nach dem Entspreizen das gewünschte Signal auf einfache Art und Weise herausgefiltert werden kann.

Während Sendevorrichtungen zur digitalen Erzeugung von Mobilfunk-Sendesignale für verschiedene Mobilfunkstandards, insbesondere beispielsweise für den derzeit üblichen GSM (Global System For Mobile Communication)-Mobilfunkstandard, bereits bekannt sind, ist das Problem der Erzeugung spreizmodulierter Signale in mobilen Endgeräten für die dritte Mobilfunkgeneration noch nicht gelöst.

In dem UMTS-Standard "Ultra physical layer description FDD parts", Ovesjö Fredrik, European Telecommunication Standard, XX, XX, 25. Juni 1998 (1998-06-25), Seiten 1 bis 41, ist ein Verfahren zur Erzeugung von spreizkodierten Signalen beschrieben, bei welchem ein Signal einer Spreizkodierung und einer nachfolgenden Verwürfelung unterzogen wird. Das bandgespreizte und verwürfelte Signal wird anschließend in einem RRC-Filter gefiltert.

In der Schrift "Transmit pulse shaping filters and CORDIC algorithm based precompensation for digital satellite communications",M. Vandermaar et al., IEEE Proceedings of the 39th Midwest Symposium on Circuits and Systems (Cat. No. 96CH35995), AMES, IA, USA, 18 - 21 Aug. 1996, Seiten 1219 bis 1222, Vol. 3, 1996, New York, NY, USA, IEEE; USA ISBN: 0-7803-3636-4), ist ein Algorithmus zur Präkompensation von Nichtlinearitäten angegeben, die in einem Signalverstärker auftreten. Der Kompensator umfasst zwei CORDIC-Stufen, die eine Koordinatentransformation des Signals von kartesischen Koordinaten in Polarkoordinaten und zurück übernehmen. Die Rechenschritte für die eigentliche Signalkompensation erfolgen zwischen den beiden CORDIC-Stufen.

In der Schrift U.S. 5,838,733 ist eine Sendeeinrichtung beschrieben, bei welcher ein auszusendendes Digitalsignal einer programmierbaren Verstärkung und einer Amplitudenbegrenzung unterzogen wird.

Der vorliegenden Erfindung liegt die Aufgabe zugrunde, ein Verfahren und eine Vorrichtung zum Erzeugen von spreizcodierten Signalen bereitzustellen, wobei die Erfindung insbesondere in Sendegeräten der dritten Mobilfunkgeneration einsetzbar sein soll.

Darüber hinaus soll die vorliegende Erfindung bevorzugt auch die Erzeugung von spreizcodierten Signalen gemäß unterschiedlichen Mobilfunkstandards, wie beispielsweise gemäß dem UMTSoder dem IS-95-Standard, erlauben.

Diese Aufgabe wird erfindungsgemäß durch ein Verfahren mit den Merkmalen des Anspruches 1 bzw. eine Vorrichtung mit den Merkmalen des Anspruches 10 gelöst. Die Unteransprüche definieren jeweils bevorzugte und vorteilhafte Ausführungsformen der vorliegenden Erfindung.

Erfindungsgemäß werden die Sendedaten, wie an sich üblich, zunächst mit einem Spreiz- oder Kanalisierungscode codiert und somit bandgespreizt sowie anschließend mit einem Verwürfelungscode codiert. An die Verwürfelung schließt sich eine Impulsformung, eine Frequenzkorrektur und eine DC-Offsetund/oder Amplitudenkompensation an, um die Sendedaten vor ihrer Weiterleitung an eine HF-Schnittstelle, von der sie über einen Kommunikationskanal an einen Empfänger übertragen werden, aufzubereiten. Dabei wird zur Frequenzkorrektur eine digitale Frequenzoffsetbeseitigung angewendet, bei welcher ein für die Frequenzkorrektur verwendeter Rotationswinkel als Linearkombination von Mikrorotationen dargestellt und die Mikrorotationen unter Anwendung des CORDIC-Algorithmus selektiv in Abhängigkeit von dem Frequenzoffset vorgenommen werden.

Zur Impulsformung kann eine RRC-Filterung mit einem sogenannten Roll-Off-Faktor von ca. 0,22 angewendet werden, wobei vorzugsweise gleichzeitig die bandgespreizten und verwürfeldeten Sendedaten mit einem bestimmten Faktor überabgetastet werden.

Zur DC-Offset-Kompensation wird den Sendedaten vorzugsweise ein bestimmter DC-Offset-Kompensationswert hinzuaddiert und es wird zur Amplitudenkompensation vorzugsweise ein bestimmter Amplitudenkompensationswert mit den Sendedaten multipliziert.

Vorzugsweise werden die Sendedaten vor ihrer Codierung mit dem Spreizcode durch Multiplikation mit einem Gewichtungsfaktor gewichtet und anschließend überabgetastet. Die Gewichtung, Überabtastung und Spreizcodierung erfolgt bevorzugt separat für die Sendedaten verschiedener physikalischer Kanäle, wobei nach der Codierung mit den einzelnen Spreizcodes die Sendedaten der physikalischen Kanäle zu einem I-Zweig und einem Q-Zweig kombiniert und die über den I-Zweig und den Q-Zweig geführten Sendedaten anschließend separat verwürfelt und der Impulsformung, Frequenzkorrektur und DC-Offsetund/oder Amplitudenkompensation unterzogen werden. Für die nach der Gewichtung durchgeführte Überabtastung wird vorzugsweise ein dem größten Spreizfaktor der einzelnen Spreizcodes entsprechender Faktor verwendet.

Für die oben zuvor beschriebene Erzeugung und Verarbeitung der spreizmodulierten oder spreizcodierten Signale ist insbesondere ein hardwaremäßig realisierter Modulator vorgesehen, der auf verschiedene programmierbare Speicher oder Register zugreift, in denen für den Betrieb des Modulators erforderliche Steuerdaten abgelegt sind. Die Programmierung dieser Register erfolgt vorzugsweise über einen Steuerbus mit Hilfe eines in Firmware ausgestalteten digitalen Signalprozessors (DSP), so daß ein hohes Maß an Flexibilität sichergestellt ist, da auch noch nachträglich lediglich durch Modifikation der Software weitere Mobilfunkstandards ohne Änderung der Hardware einbezogen werden können bzw. die Funktionalität des Modulators beeinfluß werden kann.

Die vorliegende Erfindung wird nachfolgend näher unter Bezugnahme auf die beigefügte Zeichnung anhand bevorzugter Ausführungsbeispiele erläutert.

Fig. 1 zeigt ein Blockschalltbild eines Modulators gemäß einem bevorzugten Ausführungsbeispiel der vorliegenden Erfindung,

Fig. 2 zeigt eine Darstellung zur Verdeutlichung der Anbindung des in Fig. 1 gezeigten Modulators an einen digitalen Signalprozessor und einen D/A-Wandler eines Mobilfunkgeräts,

Fig. 3 zeigt eine detaillierte Darstellung einer in Fig. 2 gezeigten Busschnittstelle des Modulators,

Fig. 4 zeigt eine Darstellung zur Erläuterung der Generierung von sogenannten OVSF-Spreiz- oder Kanalisierungscodes,

Fig. 5 zeigt einen möglichen Aufbau eines in Fig. 3 dargestellten Spreizcodegenerators,

Fig. 6 zeigt einen möglichen Aufbau einer in Fig. 1 gezeigten digitalen Frequenzkorrektureinheit, die gemäß dem sogenannten CORDIC-Algorithmus betrieben wird,

Fig. 7 zeigt eine Darstellung von verschiedenen Präambelkennungen, und

Fig. 8 zeigt einen möglichen Aufbau eines in Fig. 3 gezeigten Präambelspreizcodegenerators.

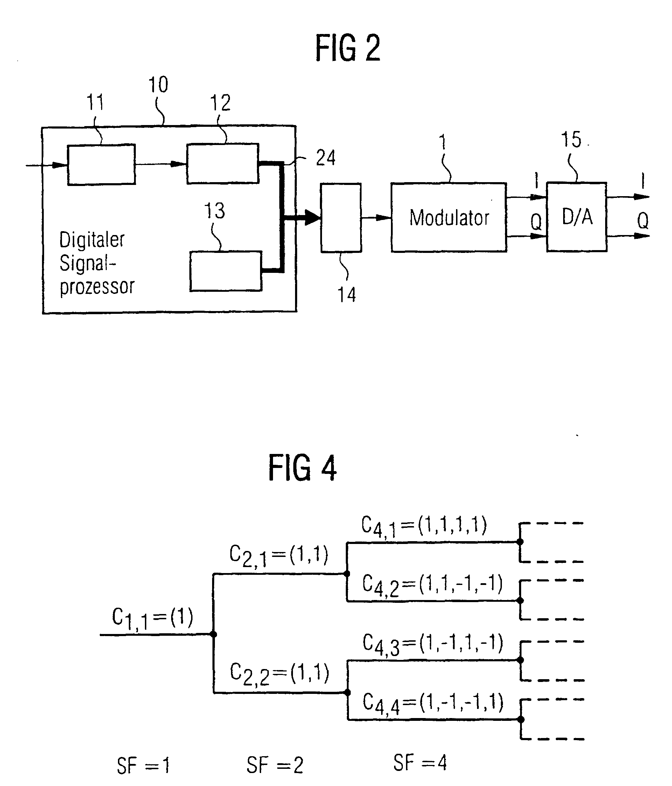

In Fig. 2 ist die Anbindung eines erfindungsgemäßen CDMA-Modulators 1 an weitere Komponenten eines Mobilfunkgeräts dargestellt. Der CDMA-Modulator 1 dient zum Spreizen von über eine Busschnittstelle 14 zugeführten Signalen verschiedener physikalischer Kanäle. Wie nachfolgend noch näher erläutert wird, moduliert der Modulator 1 sowohl Datenkanäle (DPDCH, "Dedicated Physical Data Channel") als auch Steuerkanäle (DPCCH, "Dedicated Physical Control Channel"). Zudem wird von dem Modulator 1 auch ein sogenannter "Physical Random Access Burst" gespreizt. Die Spreizung umfaßt dabei im wesentlichen eine Kanalisierung ("Channelization") und eine Verwürfelung ("Scrambling") der zu sendenden Daten. Die auf einen I- und einen Q-Pfad aufgeteilten spreizmodulierten Sendedaten werden auf eine nachfolgend noch näher beschriebene Art und Weise aufbereitet und über einen D/A-Wandler 15 an die HF-Schnittstelle des Mobilfunkgeräts ausgegeben, um von dort an einen entsprechenden Empfänger übertragen zu werden.

Der Modulator 1 ist über die Busschnittstelle 14 mit einem Steuerbus 24 verbunden. Über diesen Steuerbus 24 empfängt der Modulator 1 von einem digitalen Signalprozessor 10 sowohl Steuerdaten als auch Sendedaten.

Der digitale Signalprozessor 10 umfaßt einen Abschnitt 11, um die auf ein HF-Trägersignal aufmodulierten Sendedaten (beispielsweise unter Verwendung eines Faltungscodes ("Convolutional Code")) einer Kanalcodierung zu unterziehen und nach einer Interleavingprozedur zu multiplexen und auf mehrere physikalische Datenkanäle (DPDCH) und einen physikalischen Steuerkanal (DPCCH) abzubilden. Die Datenkanäle enthalten die eigentlichen Kommunikationsinformationen, während der Steuerkanal Steuerinformationen (z.B. Bits zur Regelung der Sendeleistung, bekannte Pilotbits zur Kanalschätzung oder Formatkennungsbits etc.) für das Mobilfunksystem bzw. die mit dem Mobilfunkgerät kommunizierende Basisstation aufweist. Die auf diese Weise aufbereiteten Sendedaten werden an einen Abschnitt 12 weitergeleitet, wo sie formatiert, d.h. in eine bestimmte Rahmen- und Zeitschlitzstruktur eingebettet werden. Für den Fall des Sendens des sogenannten "Random Access Burst" wird eine Präambel mit der Dauer 1ms übertragen, wobei von dem Abschnitt 12 auch die Symbole dieser Präambel generiert werden. Darüber hinaus weist der digitale Signalprozessor 10 einen Abschnitt 13 auf, der im wesentlichen Steuerdaten für den Modulator 1 generiert. Diese Steuerdaten umfassen, wie nachfolgend noch näher erläutert wird, insbesondere die von dem Modulator 1 zu verwendenden Gewichtungsfaktoren und Spreizcodes/Spreizfaktoren sowie Steuerinformationen für eine von dem Modulator 1 durchzuführende Frequenzkorrektur und DC-Offset- und Amplitudenkompensation. Über die Steuerdaten können somit verschiedene Funktionen des Modulators 1 programmiert werden.

Während der digitale Signalprozessor 10 mit seinen Abschnitten 11-13 vorzugsweise in Firmware realisiert ist, liegen der Modulator 1 mit der Busschnittstelle 14 sowie der D/A-Wandler 15 in Hardware vor. Durch die Programmierbarkeit des Modulators 1 über den digitalen Signalprozessor 10 ist ein hohes Maß an Flexibilität gegeben, da die von dem Modulator 1 durchzuführende Spreizmodulation somit leicht an unterschiedliche Mobilfunkstandards angepaßt werden kann, ohne hierzu die Hardware ändern zu müssen.

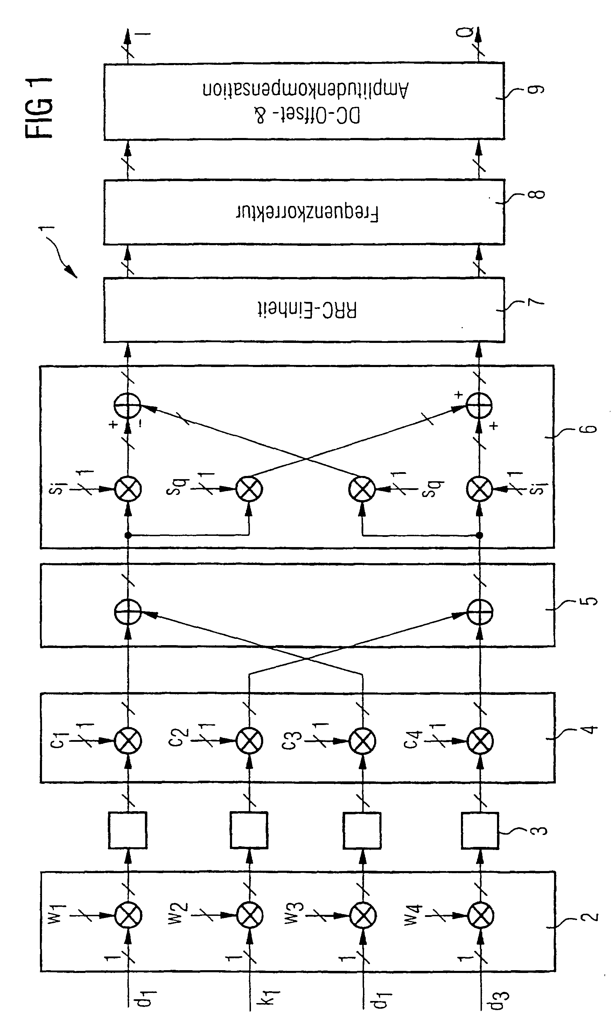

In Fig. 1 ist detailliert der Aufbau des Modulators 1 dargestellt, wobei der Modulator 1 insbesondere zur Übertragung von vier physikalischen Kanälen, nämlich einem physikalischen Steuerkanal k1 und drei physikalischen Datenkanälen d1-d3, ausgestaltet ist. Die realisierte Datenmodulation entspricht einer Zweikanal-QPSK-Modulation ("Quadrature Phase Shift keying"), wobei die vier physikalischen Kanäle über einen I-bzw. einen Q-Zweig geleitet werden.

Zunächst werden die mit dem Symboltakt $1/T_s$ vorliegenden Eingangssymbole des digitalen Modulators 2 einer Gewichtungseinheit 2 zugeführt, wo sie mit kanalspezifischen Gewichtungsfaktoren w1-w4 gewichtet werden, um im Falle von unterschiedlichen Spreizfaktoren Leistungsdifferenzen der einzelnen Kanäle auszugleichen. Anschließend werden die daraus resultierenden Sendewörter in Einheiten 3 mit einem Faktor derart überabgetastet, daß die volle Chiprate erzielt wird. Der Spreizfaktor kann beispielsweise zwischen 4 und 512 variieren und wird von dem digitalen Signalprozessor 10 über den Steuerbus 24 in die Busschnittstelle 14 des Modulators 1 geladen, so daß der Modulator 1 auf diesen Wert zugreifen kann. Durch die Überabtastung wird somit die Abtastrate auf $1/T_c = SF*1/T_s$ erhöht.

In einer Einheit 4 erfolgt anschließend die Codierung oder Kanalisierung der einzelnen Kanäle mit Hilfe von kanalspezifischen Spreiz- oder Kanalisierungscodes c1-c4. Durch die Kanalisierung wird jedes Datensymbol in eine bestimmte Anzahl von sogenannten "Chips" transformiert. Die sich daraus ergebende Anzahl der Chips pro Datensymbol entspricht dem Spreizfaktor (SF).

Die auf diese Weise aufbereiteten und bandgespreizten Signale werden daraufhin in einem Kanaladdierer 5 wie in Fig. 1 gezeigt addiert, wobei bei dem in Fig. 1 gezeigten Ausführungsbeispiel die einzelnen Datensymbole der Kanäle d1 und d2 bzw. d3 und k1 addiert und somit auf einen I-Zweig und einen Q-Zweig aufgeteilt werden.

In einer verwürfelungseinheit 6 werden die bandgespreizten Signale mit den Symbolen si bzw. sq eines komplexen Verwürfelungscodes mutlipliziert. Abschließend erfolgt in Einheiten 7-9 eine Signalaufbereitung der Signale des I-Zweigs und des Q-Zweigs.

Dabei handelt es sich bei der Einheit 7 um eine sogenannte RRC-Einheit 4("Root Raised Cosine"), welche im Prinzip einem digitalen Filter entspricht und dazu dient, durch RRC-Impulsformung eine optimale Bandbeschränkung bei zugleich optimalem Frequenzgang zu erzielen. Dabei kann insbesondere eine RRC-Impulsformung mit einem sogenannten Roll-Off-Faktor von 0,22 verwendet werden. Durch die RRC-Einheit 7 erfolgt zudem eine Überabtastung der ihr zugeführten I- und Q-Signale mit einem Faktor M, wobei M insbesondere den Wert 4 aufweisen kann.

Die Einheit 8 führt eine digitale Frequenzkorrektur bezüglich der über den I- und Q-Zweig geführten Signale durch, wobei vorzugsweise der sogenannte CORDIC-Algorithmus Anwendung findet. Dabei handelt es sich um einen iterativen Algorithmus, mit dessen Hilfe ein bestimmter Frequenzoffset eliminiert werden kann. Die allgemeinen Grundlagen des CORDIC-Algorithmus sind beispielsweise in "The CORDIC Trigometric Computing Technique", J.E. Volder, IRE Trans. Electronic Computers, vol. 8, Seiten 330-334, 1959 oder "A Unified Algorithm For Elementary Functions", J.S. Walther, Spring Joint Conference Seiten 370-385, 1971 beschrieben.

Im vorliegenden Fall wird der CORDIC-Algorithmus im trigonometrischen Koordinatensystem angewendet, wobei ein Eingangsvektor mit dem Wertepaar $(I_n, Q_n)$ um den vorgegebenen Winkel

$$\alpha_n = \arctan(2^{-n})$$

mit n = 0, 1, ..., N-1

gedreht wird. Dabei bezeichnet N die Iterationslänge.

Die Winkelfolge $\{\alpha_0, \alpha_1, ..., \alpha_{N-1}\}$ mit $\alpha_0 > \alpha_1 > ... > \alpha_{N-1}$ wird derart festgelegt, daß jeweils ein Winkel z, der die Bedingung $|z| \leq D$ mit $D = \alpha_0 + \alpha_1 + ... + \alpha_{N-1}$ erfüllt, durch eine geeignete Linearkombination der einzelnen Winkel $\alpha_n$ dargestellt werden kann:

$$z \approx \sigma_0\alpha_0 + \sigma_1\alpha_1 + ... + \sigma_{N-1}\alpha_{N-1}$$

mit $\sigma_n = \pm1$

Dabei wird D als Konvergenzbereich bezeichnet.

Auf diese Weise wird der Eingangsvektor $(I_n, Q_n)$ nicht unmittelbar um den Winkel z, sondern durch eine Folge von N aufeinanderfolgende 'Mikrorotationen' um die kleineren Winkel $\sigma_n\alpha_n$ gedreht. Dabei entspricht $\sigma_n$ dem Vorzeichen der n-ten Mikrorotation, welches abhängig von dem Winkel z festgelegt wird.

Die Grundidee des CORDIC-Algorithmus besteht darin, sämtliche Mikrorotationen durch einfache Verschiebe- und Addiervorgänge zu realisieren:

$$I_{n+1} = I_n - \sigma_n2^{-n} Q_n$$

$$Q_{n+1} = \sigma_n2^{-n} I_n + Q_n$$

Wie sich aus der obigen Formel für $\alpha_n$ ableiten läßt, kann somit der Vektor $(I_N, Q_N)$ abhängig von dem Vektor $(I_0, Q_0)$ dargestellt werden:

$$\begin{bmatrix} I_N \\ Q_N \end{bmatrix} = K\begin{bmatrix} \cos(z) & -\sin(z) \\ \sin(z) & \cos(z) \end{bmatrix}\begin{bmatrix} I_0 \\ Q_0 \end{bmatrix} \quad \text{mit} \quad K = \prod_{n=0}^{N-1} \sqrt{1 + 2^{-2n}} \approx 1,6$$

K ist dabei ein konstanter Skalierfaktor, der unabhängig von dem Rotationswinkel z ist.

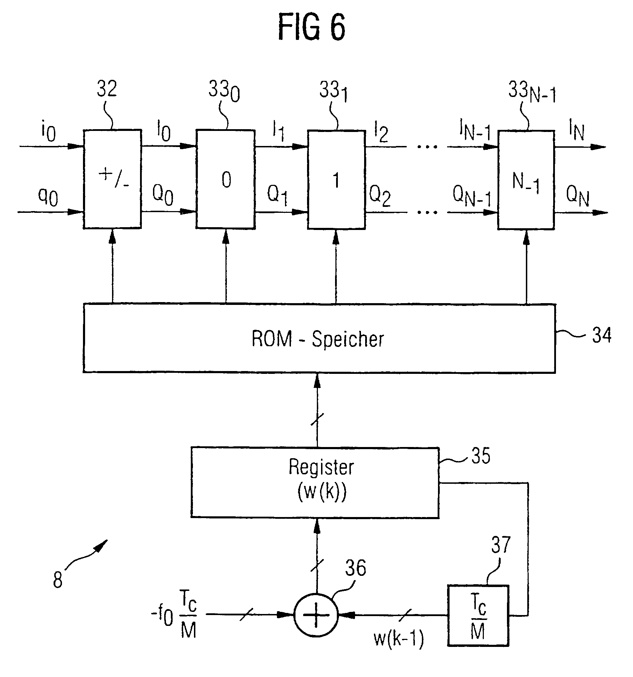

In Fig. 6 ist eine Schaltungsanordnung der Einheit 8 zur Realisierung der automatischen Frequenzkorrektur unter Anwendung des CORDIC-Algorithmus dargestellt. Dabei wird angenommen, daß $f_0$ den zu korrigierenden Frequenzoffset, $T_c$ die Empfangsbitperiode und M den Überabtastungsfaktor des mit dem CORDIC-Algorithmus zu verarbeitenden Basisbandsignals darstellt.

Das durch die Signalkomponenten i(k) und q(k) definierte komplexe Basisbandsignal i(k)+jq(k) (k bezeichnet den Abtastindex) wird mit exp(jz(k)) multipliziert, wobei gilt:

$$z(k) = -2\pi f_0 \frac{T_c}{m} k$$

Diese Multiplikation wird durch Anwendung des CORDIC-Algorithmus durchgeführt, wobei die Phasenakkumulation durch den in Fig. 6 gezeigten Akkumulator 36 durchgeführt wird. Von einer in Form eines ROM-Speichers ausgestalteten Steuereinheit 34 werden die zur Ansteuerung der einzelnen Mikrorotationseinheiten $33_0...33_{N-1}$ benötigten Rotationsvorzeichen $\sigma_0... \sigma_{N-1}$ erzeugt. Die Iterationslänge kann beispielsweise N = 16 betragen, so daß entsprechend 16 Mikrorotationseinheiten vorgesehen sind.

Wie bereits erwähnt worden ist, werden von dem CORDIC-Algorithmus lediglich Winkel z mit $|z| \leq D$ verarbeitet. Für N = 16 gilt $D \approx 99°$. Das Winkel- oder Phaseninkrement kann jedoch für jede Bitperiode so groß sein, daß der Wert z(k) während eines Bursts Werte größer als 360° erreichen kann.

Bei der in Fig. 6 gezeigten Schaltungsanordnung wird daher der Winkel z derart verringert, daß er stets maximal 90° beträgt. Zu diesem Zweck wird gemäß Fig. 6 mit Hilfe des Akkumulators 36 und einem Verzögerungsglied 37 der Wert $w(k) = w(k-1)-f_0T_c$ akkumuliert, wobei gilt:

$$w(k) = \frac{z(k)}{2\pi}$$

Das Bitmuster 111...111 von w(k) entspricht in der Festkomma-Darstellung dem Maximalwert $w(k) \approx 1$ bzw. $z(k) \approx 2\pi$. Somit ist die Modulo-Operation w(k) mod 1 bzw. z(k) mod $2\pi$ realisiert, so daß der Winkel z(k) stets auf den Wertebereich $0 \leq z(k) \leq 2\pi$ beschränkt wird.

Die einzelnen Werte w(k) werden in dem in Fig. 6 gezeigten Register 35 gespeichert und dienen zur Ansteuerung des ROM-Speichers 34, was noch näher nachfolgend erläutert wird.

Der CORDIC-Algorithmus weist gute Ergebnisse auf, falls sich der Phasenwinkel z(k) im ersten oder vierten Quadranten befindet. Daher wird bei der in Fig. 6 gezeigten Schaltungsanordnung das Vorzeichen von i(k) und q(k) mit -1 multipliziert, falls z(k) im zweiten oder dritten Quadranten liegt. Anschließend wird das Wertepaar (-i(k), -q(k)) um den Winkel $z(k) - \pi$ gedreht, wobei dieser Winkel sicher im vierten oder ersten Quadranten liegt. Diese Aufgabe wird von der in Fig. 6 gezeigten Einheit 32 wahrgenommen, welche abhängig von einem Steuersignal s des ROM-Speichers 34 wahlweise das Vorzeichen von i(k) und q(k) negiert oder nicht.

Der ROM-Speicher 34 ist derart ausgestaltet, daß für jeden Wert $w(k) = (w_0, w_1,...,w_{N+1})$ unmittelbar entsprechende Werte für s und $\sigma_0... \sigma_{N-1}$ ausgelesen werden können, wobei $w_0$ das höchstwertige Bit (Most Significant Bit, MSB) von w(k) darstellt. Das Vorzeichenflag s kann dabei unmittelbar durch die logische Operation $w_0$ XOR $w_1$ ermittelt werden, da durch diese beiden Bits der Quadrant des Phasenwinkels z(k) bestimmt ist. Das Vorzeichen der ersten Mikrorotation $\alpha_0$ ist stets mit $w_1$ identisch, da im ersten und dritten Quadranten für die erste Rotationsrichtung stets $\sigma_0 = +1$ gilt.

Die verbleibenden N-1 Vorzeichen $\sigma_1... \sigma_{N-1}$ werden hingegen von den übrigen N Bits $w_1, w_2,..., w_{N+1}$ des w(k)-Registers 35 abgeleitet. Der ROM-Speicher 34 kann demzufolge in Form einer N Bit x (N-1) Bit-Tabelle in Kombination mit einem XOR-Gatter realisiert sein, wobei in dieser ROM-Tabelle für jede Kombination der Bits $w_1,w_2,...,w_{N+1}$ die entsprechenden Werte für die Vorzeichen $\sigma_1 ... \sigma_{N-1}$ abgelegt sind.

Die Einheit 9 dient zur DC-Offset- und Amplitudenkompensation. Sie ist derart aufgebaut, daß die eintreffenden Sendewörter des I- und Q-Zweigs zunächst mit einem Amplitudenkompensationswert multipliziert und anschließend mit einem DC-Offset-Kompensationswert addiert werden. Die Einheit 9 kann somit einfach durch eine jeweils für den I-Zweig und den Q-Zweig vorzusehende Multiplizierer/Addierer-Struktur gebildet werden. Als Wertebreich kann vorzugsweise für den DC-Offset-Kompensationswert -1023...1023 und für den Amplitudenkompensationswert 0...1023 verwendet werden.

Nachdem zuvor ausführlich der Aufbau des Modulators 1 beschrieben worden ist, soll nachfolgend näher auf den Aufbau der in Fig. 2 gezeigten Busschnittstelle 14 sowie deren Zusammenwirken mit dem digitalen Signalprozessor 10 einerseits und dem digitalen Modulator 1 andererseits eingegangen werden.

Wie bereits erwähnt worden ist, werden von dem digitalen Signalprozessor 10 über den Steuerbus 24 neben den eigentlichen Sendedaten einige Steuerdaten oder Steuerinformationen an den Modulator 1 zum Steuern oder Programmieren dessen Betriebs übertragen. Die Busschnittstelle 14 umfaßt daher verschiedene Puffer oder Register, in denen die von dem digitalen Signalprozessor 10 übertragenen Informationen gespeichert werden.

Für die Sendedaten der physikalischen Kanäle d1-d3 und k1 weist die Busschnittstelle 14 des digitalen Modulators 1 einen Eingangspuffer 16 auf, in dem von dem digitalen Signalprozessor 10 einmal pro Zeitschlitz ("Slot") die entsprechenden Sendesymbole der einzelnen physikalischen Kanäle gespeichert werden. Durch ein an den Eingangspuffer 16 angelegtes Steuersignal, welches entweder den Wert "slot_preamb_f" oder "slot_preamb_r" aufweist, kann im Falle einer zu sendenden Präambel die Daten für eine normale Präambel oder eine "Random Access Burst"-Präambel ausgewählt werden. Besitzt dieses Steuersignal den Wert "slot_preamb_r", d.h. soll eine Präambel für einen "Random Access Burst" gesendet werden, werden über den Eingangspuffer 16 lediglich die an den Eingangspuffer 16 anliegenden "1"-Werte dem Modulator 1 zugeführt.

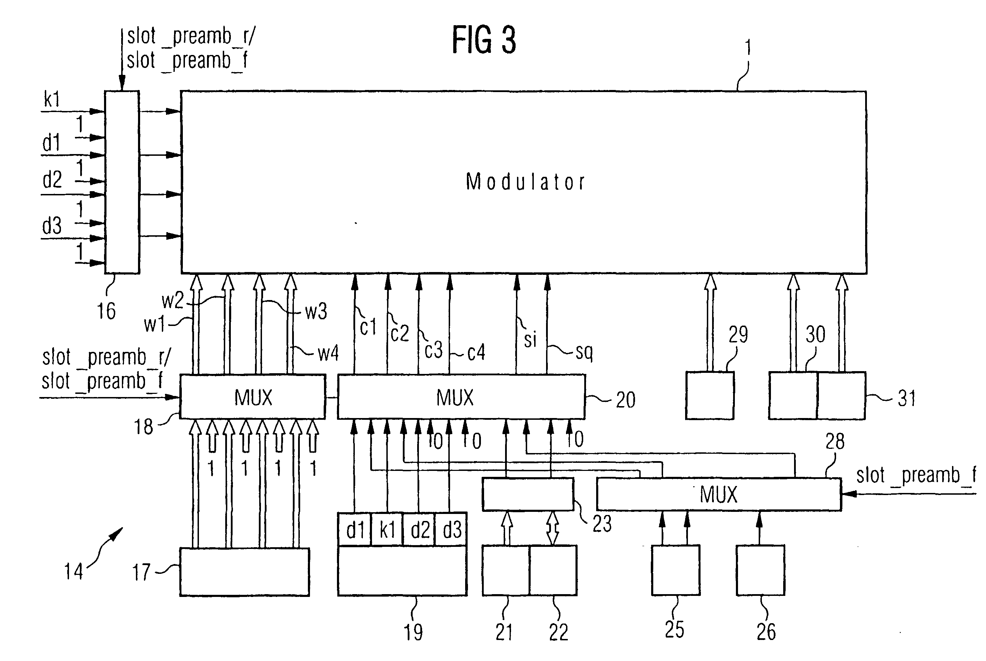

Die weiteren in Fig. 3 gezeigten Bestandteile der Busschnittstelle 14 sind hingegen für die Steuerdaten des digitalen Signalprozessors 10 vorgesehen. Einmal pro Verbindung werden von dem digitalen Signalprozessor 10 die Gewichtungsfaktoren für die vier physikalischen Kanäle übertragen und in einem Gewichtungsregister 17 gespeichert. Über einen Multiplexer 18, der analog zu dem Eingangspuffer 16 das Steuersignal "slot_preamb_f/slot_preamb_r" empfängt, können wahlweise diese Gewichtungsfaktoren oder jeweils der binäre Wert "1" an die Gewichtungseinheit 2 des digitalen Modulators 1 angelegt werden.

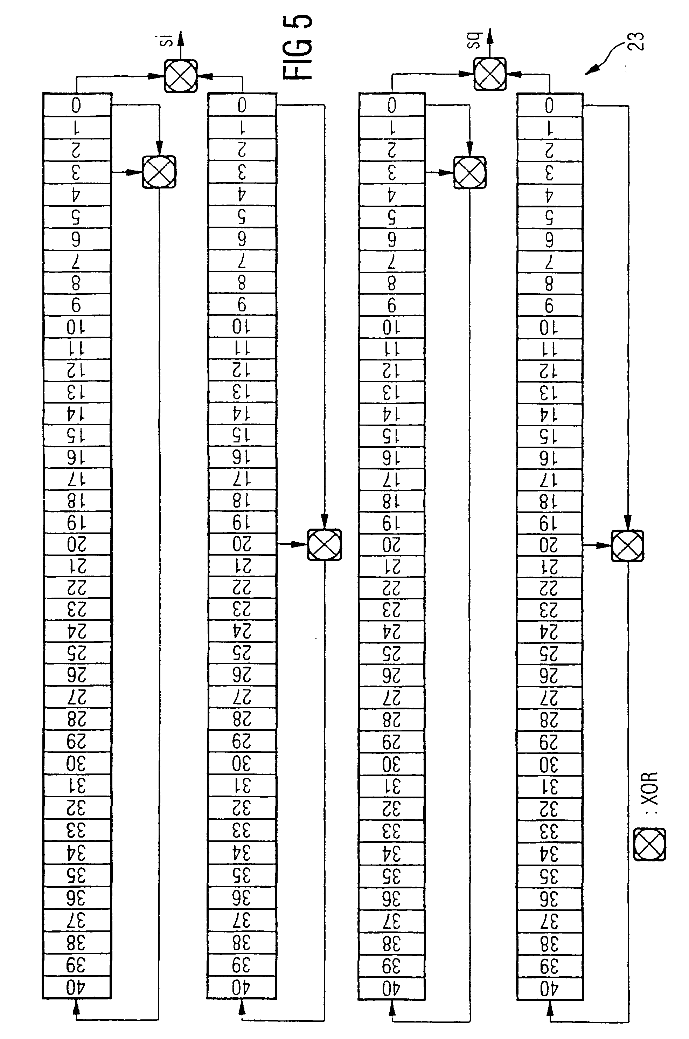

Des weiteren werden von dem digitalen Signalprozessor 10 einmal pro Verbindung die Kanalisierungscodes an einen RAM-Speicher 19 mit für die einzelnen physikalischen Kanäle (d1...d3, k1) vorgesehenen Bereichen, wo für jeden physikalischen Kanal die entsprechenden Spreiz- oder Kanalisierungscodeinformationen gespeichert werden, übertragen. Jeder Kanalisierungscode entspricht einer binären Folge der Länge SF und wird durch einen entsprechenden Algorithmus im digitalen Signalprozessor 10 bzw. in dem in Fig. 2 gezeigten Abschnitt 13 generiert. In Fig. 4 ist ein beispielhafter Codebaum für die von dem digitalen Signalprozessor 10 durchgeführte Generierung von sogenannten OVSF-Codes $c_{i,j}$ ("Orthogonal Variable Spreading Factor") für unterschiedliche Spreizfaktoren SF dargestellt, wobei der Index i dem jeweiligen Spreizfaktor entspricht und der Index j die jeweilige Codenummer angibt. Dabei ist zu beachten, daß die binären Werte "1" und "0" auf die Werte "+1" und "-1" abgebildet worden sind.

Darüber hinaus weist die dem digitalen Modulator 1 zugeordnete Busschnittstelle 14 einen Verwürfelungscodegenerator 23 auf, der zur Generierung des komplexen Verwürfelungscodes mit zwei Registern 21 und 22 zusammenwirkt. Der digitale Signalprozessor 10 überträgt über den Steuerbus 24 Voreinstellungswerte für den Realteil si des Verwürfelungscodes an das Register 21, sobald das entsprechende Mobilfunkgerät eingeschaltet oder ein Handovervorgang eingeleitet worden ist. Ein möglicher Aufbau des Verwürfelungscodegenerators 23 ist in Fig. 5 dargestellt, woraus ersichtlich ist, daß der Verwürfelungscodegenerator 23 im wesentlichen aus zwei Schieberegisteranordnungen mit über XOR-Gatter parallelgeschalteten Schieberegisterketten besteht, wobei die in Fig. 5 obere Schieberegisteranordnung für die Generierung des Realteils si und die untere Schiebergisteranordnung für die Generierung des Imaginärteils sq des Verwürfelungscodes vorgesehen ist. Zur Generierung des Verwürfelungscodes werden zunächst die beiden ersten Schieberegister der Realteil-Schieberegisteranordnung mit den Anfangswerten des Registers 21 belegt, welches wiederum zuvor von dem digitalen Signalprozessor wie bereits erläutert belegt worden ist. Anschließend wird die obere Schieberegisteranordnung 1024 Zyklen lang ausgehend von diesen Anfangswerten betrieben, um anschließend die sich daraus ergebenden Werte der Schieberegister als Anfangswerte für die Schieberegister der Imaginärteil-Schieberegisteranordnung in dem Register 22 zu speichern. D.h. die Anfangswerte für den Imaginärteil sq des Verwürfelungscodes werden innerhalb des Modulators 1 bzw. seiner Busschnittstelle 14 generiert. Der Inhalt des Imaginärteil-Registers 22 kann anschließend von dem digitalen Signalprozessor 10 zu Testzwecken gelesen und ausgewertet werden. Nachdem auf diese Weise neben dem Realteil-Register 21 auch das Imagiärteil-Register 22 mit den Anfangswerten für die in Fig. 5 gezeigten Schieberegisterketten belegt worden ist, werden alle Schieberegister der beiden Schieberegisteranordnungen während des Betriebs mit ihren entsprechenden Anfangswerten aus dem Realteil-Register 21 bzw. dem Imaginärteil-Register 22 belegt, wobei dies synchron zu einem Rahmensynchronisiersignal erfolgt, d.h. die Schieberegister werden jeweils einmal pro Rahmen mit ihren Anfangswerten belegt. Wie nachfolgend noch näher erläutert wird, ist der in Fig. 3 gezeigte Multiplexer 20 analog zu dem Multiplexer 18 dazu vorgesehen, im Falle einer zu sendenden "Random Access Burst"-Präambel anstelle der Ausgangswerte des Verwürfelungscodegenerators 23 die zur Generierung dieser Präambel benötigten und von einem Präambelspreizcodegenerator mit den Komponenten 25, 26 und 28 gelieferten Eingangswerte des Multiplexers 18 durchzuschalten.

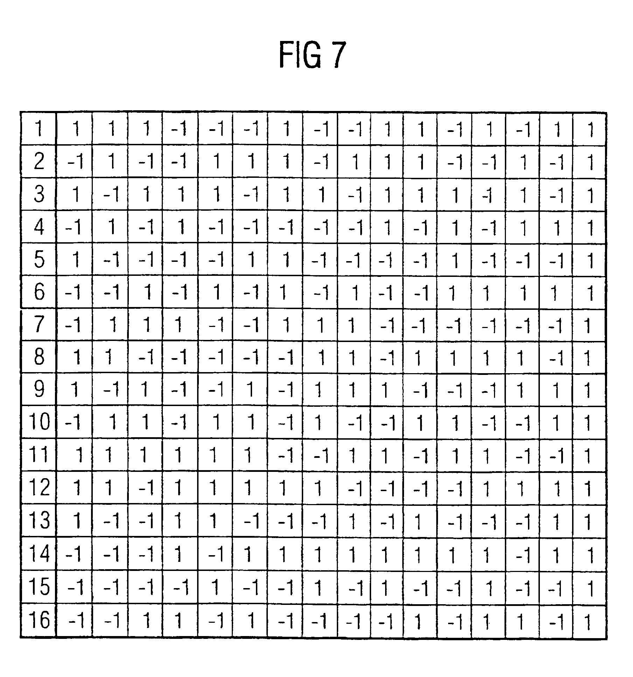

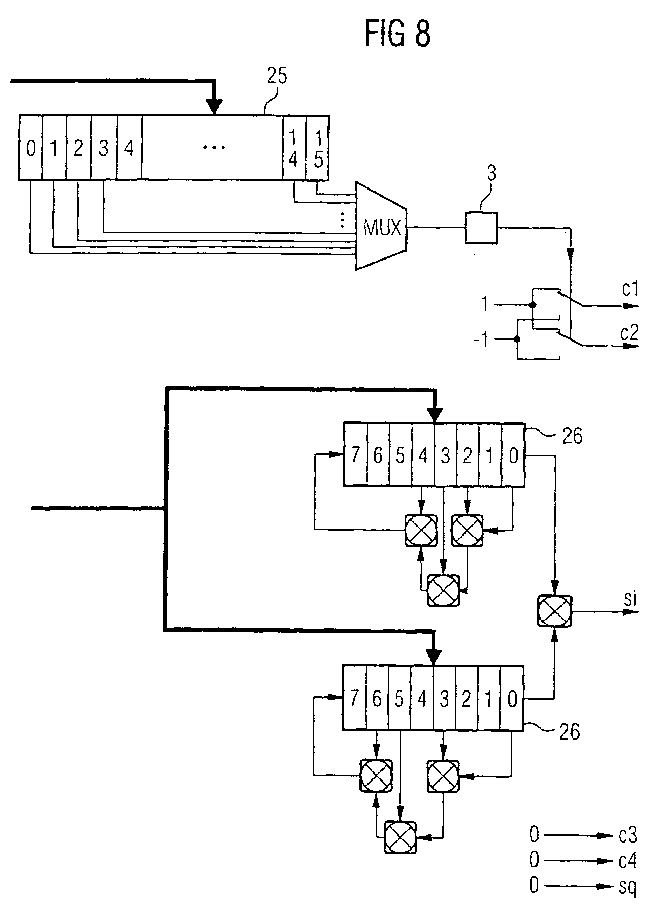

Es wurde bereits darauf hingewiesen, daß im Falle eines "Random Access Burst" eine Präambel mit einer Dauer von 1ms gesendet wird. In diesem Fall werden über das Steuersignal "slot_preamb_r" mit Hilfe der Multiplexer 18 und 20 alle Zugangsleitungen des Modulators 1, welche den Modulator 1 mit dem Gewichtungsregister 17, dem Kanalisierungscodespeicher 19 und dem Verwürfelungscodegenerator 23 verbinden, auf die Präambelspreizcodegeneratorkomponenten, d.h. auf Register 25, 26 und einen Multiplexer 28, umgeschaltet. Die Präambel weist eine von beispielsweise 16 verschiedenen orthogonalen komplexen Kennungen der Länge 16 auf, wobei eine Liste mit den verfügbaren Kennungen von der entsprechenden Basisstation an das Mobilfungerät übertragen wird. Die jeweils gewählte Kennung wird von dem digitalen Signalprozessor 10 über den Steuerbus 24 in ein Kennungsregister 25 geladen. Eine Aufstellung der verfügbaren Präambelkennungen ist beispielhaft in Fig. 7 dargestellt. Wie zudem in Fig. 8 gezeigt ist, werden die einzelnen Kennungssymbole mit Hilfe eines Multiplexers gemultiplext und mit Hilfe einer Überabtastungseinheit 3 beispielsweise mit 3,84 MHz oder einer Rate von 3840 Abtastwerten/s abgetastet, so daß jedes in dem Kennungsregister 25 gespeicherte Symbol 256mal wiederholt wird, um somit den 1ms-Zeitschlitz für die Präambel auszufüllen. Für jeden Chip wird auf diese Weise ein "1"- oder "-1"-Wert für den I- bzw. Q-Zweig generiert, der als Spreizcodesymbol c1 bzw. c2 an den Multiplexer 20 angelegt wird. Die beiden anderen Spreizcodesymbole c3 und c4 werden hingegen, wie auch in Fig. 3 dargestellt ist, stets mit "0" belegt.

Von dem digitalen Signalprozessor 10 werden auch Anfangswerte für den zu generierenden Präambelspreizcode an die Busschnittstelle 14 übertragen, wobei diese Anfangswerte in Präambelspreizcoderegistern 26 gespeichert werden. Der Aufbau der Präambelspreizcoderegister 26 und die daraus resultierende Generierung des Spreizcodes ist ebenfalls in Fig. 8 dargestellt, woraus ersichtlich ist, daß mit Hilfe der Präambelspreizcoderegister 26, die vorzugsweise mit 3,84 MHz betrieben werden, lediglich Bits für den Realteil si des komplexen Spreizcodes generiert werden, während der Imaginärteil sq stets mit dem Wert "0" belegt ist (vgl. auch Fig. 3).

Neben den zuvor beschriebenen Steuerdaten werden von dem digitalen Signalprozessor 10 über den Steuerbus 24 auch Steuerdaten für den Betrieb der Einheiten 8 und 9 (vgl. Fig. 1) übertragen. So wird einmal pro Zeitschlitz von dem digitalen Signalprozessor 10 ein Frequenzkorrekturwert in ein Frequenzkorrekturregister 29, ein DC-Offset-Kompensationswert in ein DC-Offset-Kompensationsregister 30 und ein Amplitudenkompensationswert in ein Amplitudenkompensationsregister 31 geladen. Die Frequenzkorrektureinheit 8 wird daraufhin mit dem in dem Register 29 gespeicherten Wert betrieben, während die DC-Offset- und Amplitudenkompensationseinheit 9 mit den in den Registern 30 und 31 gespeicherten Werten betrieben wird. Obwohl dies bei dem dargestellten Ausführungsbeispiel nicht vorgesehen ist, ist grundsätzlich auch denkbar, auf analoge Art und Weise die RRC-Einheit 7 zu programmieren.

**EP 1 216 516 B1**

**Patentansprüche**

1. Verfahren zum Erzeugen von spreizcodierten Signalen, wobei Sendedaten mit einem Spreizcode (c1...c4) codiert und bandgespreizt werden, und

   wobei die bandgespreizten Sendedaten mit einem Verwürfelungscode (si,sq) codiert und anschließend einer Impulsformung unterzogen werden,

   **dadurch gekennzeichnet,**

   **daß** die bandgespreizten und verwürfelten Sendedaten ferner einer Frequenzkorrektur und einer DC-Offset- und/oder Amplitudenkompensation unterzogen werden, wobei zur Frequenzkorrektur eine digitale Frequenzoffsetbeseitigung angewendet wird, bei welcher ein für die Frequenzkorrektur verwendeter Rotationswinkel als Linearkombination von Mikrorotationen dargestellt und die Mikrorotationen unter Anwendung des CORDIC-Algorithmus selektiv in Abhängigkeit von dem Frequenzoffset vorgenommen werden.

2. Verfahren nach Anspruch 1,

   **dadurch gekennzeichnet,**

   **daß** zur Impulsformung eine RRC-Filterung mit einem Roll-Off-Faktor von ca. 0,22 angewendet wird.

3. Verfahren nach Anspruch 1 oder 2,

   **dadurch gekennzeichnet,**

   **daß** die bandgespreizten und verwürfelten Sendedaten während der Impulsformung mit einem bestimmten Überabtastungsfaktor (M) überabgetastet werden.

4. Verfahren nach Anspruch 3,

   **dadurch gekennzeichnet,**

   **daß** der Überabtastungsfaktor (M) der Impulsformung dem Wert vier entspricht.

5. Verfahren nach einem der vorhergehenden Ansprüche,

   **dadurch gekennzeichnet,**

   **daß** die DC-Offset-Kompensation durch Addition eines bestimmten DC-Offset-Kompensationswerts zu den Sendedaten erfolgt, und

   **daß** die Amplitudenkompensation durch Multiplikation der Sendedaten mit einem bestimmten Amplitudenkompensationswert erfolgt.

6. Verfahren nach einem der vorhergehenden Ansprüche,

   **dadurch gekennzeichnet,**

   **daß** die Sendedaten vor ihrer Codierung mit dem Spreizcode (c1...c4) durch Multiplikation mit einem Gewichtungsfaktor (w1...w4) gewichtet und anschließend überabgetastet werden.

7. Verfahren nach Anspruch 6,

   **dadurch gekennzeichnet,**

   **daß** Sendedaten mehrerer physikalischer Kanäle (d1....d3, k1) vorliegen,

   **daß** die Sendedaten jedes Kanals separat gewichtet, überabgetastet und mit einem kanalspezifischen Spreizcode (c1...c4) codiert werden, und

   **daß** nach der Codierung mit den Spreizcodes (c1...c4) die Sendedaten der physikalischen Kanäle (d1...d3, k1) zu einem I-Zweig und einem Q-Zweig kombiniert werden, wobei die über den I-Zweig und den Q-Zweig geführten Sendedaten anschließend separat verwürfelt und der Impulsformung, Frequenzkorrektur und DC-Offset- und/oder Amplitudenkompensation unterzogen werden.

8. Verfahren nach Anspruch 6 und Anspruch 7,

   **dadurch gekennzeichnet,**

   **daß** die Überabtastung mit einem Überabtastungsfaktor derart erfolgt, daß durch die nachfolgende Codierung mit den Spreizcodes eine maximale Chiprate erzielt werden kann.

9. Verfahren nach einem der vorhergehenden Ansprüche,

   **dadurch gekennzeichnet,**

   **daß** das Verfahren von einem Modulator (1) durchgeführt wird, von dem Betriebsparameter über einen Steuerbus (24) programmiert werden.

**10.** Vorrichtung zum Erzeugen von spreizcodierten Signalen, mit einer Spreizcodiereinrichtung (4) zum Codieren von zu übertragenden Sendedaten mit einem Spreizcode (c1...c4), und mit einer Verwürfelungseinrichtung (6) zum Verwürfeln der spreizcodierten Sendedaten mit einem Verwürfelungscode (si, sq), und wobei die von der Verwürfelungseinrichtung (6) ausgegebenen Sendedaten Signalaufbereitungsmitteln (7-9) zugeführt werden, welche Mittel zur Impulsformung umfassen,
**dadurch gekennzeichnet,**
**daß** die Signalaufbereitungsmittel (7-9) ferner Mittel zur Frequenzkorrektur und Mittel zur DC-Offset- und/oder Amplitudenkompensation umfassen, wobei die Mittel zur Frequenzkorrektur eine digitale Frequenzkorrektureinrichtung (8) umfassen, welche eine Hintereinanderschaltung von selektiv in Abhängigkeit von dem Frequenzoffset ansteuerbaren Mikrorotationseinheiten ($33_0..33_{N-1}$) enthält, die einen Frequenzoffset unter Anwendung des CORDIC-Algorithmus beseitigen.

**11.** Vorrichtung nach Anspruch 10,
**dadurch gekennzeichnet,**
**daß** die Mittel zur Impulsformung eine RRC-Filtereinrichtung (7) umfassen.

**12.** Vorrichtung nach Anspruch 11,
**dadurch gekennzeichnet,**
**daß** die RRC-Filtereinrichtung (7) einen Roll-Off-Faktor von ca. 0,22 besitzt.

**13.** Vorrichtung nach Anspruch 11 oder 12,
**dadurch gekennzeichnet,**
**daß** die RRC-Filtereinrichtung (7) die von der Verwürfelungseinrichtung (6) ausgegebenen Sendedaten während der Impulsformung mit einem bestimmten Überabtastungsfaktor (M) überabtastet.

**14.** Vorrichtung nach einem der Ansprüche 10-13,
**dadurch gekennzeichnet,**
**daß** die Mittel (7-9) zur DC-Offset- und/oder Amplitudenkompensation eine DC-Offset- und Amplitudenkompensationseinrichtung (9) umfaßt, welche die DC-Offset-Kompensation durch Addition eines bestimmten DC-Offset-Kompensationswerts zu den Sendedaten und die Amplitudenkompensation durch Multiplikation der Sendedaten mit einem bestimmten Amplitudenkompensationswert durchführt.

**15.** Vorrichtung nach einem der Ansprüche 10-14,
**dadurch gekennzeichnet,**
**daß** der Spreizcodiereinrichtung (4) eine Gewichtungseinrichtung (2) vorgeschaltet ist, welche die Sendedaten durch Multiplikation mit einem Gewichtungsfaktor (w1...w4) gewichtet.

**16.** Vorrichtung nach Anspruch 15,
**dadurch gekennzeichnet,**
**daß** zwischen der Gewichtungseinrichtung (2) und der Spreizcodiereinrichtung (4) eine Überabtastungseinrichtung (3) angeordnet ist, welche die von der Gewichtungseinrichtung (2) ausgegebenen gewichteten Sendedaten mit einem bestimmten Abtastungsfaktor überabtastet.

**17.** Vorrichtung nach Anspruch 15 oder 16,
**dadurch gekennzeichnet,**
**daß** der Vorrichtung (1) die Sendedaten mehrerer physikalischer Kanäle (d1...d3, k1) zugeführt sind,
**daß** die Gewichtungseinrichtung (2) die Sendedaten jedes physikalischen Kanals separat gewichtet,
**daß** die Spreizcodiereinrichtung (4) die gewichteten Sendedaten jedes physikalischen Kanals (d1...d3, k1) separat mit einem kanalspezifischen Spreizcode (c1...c4) codiert, und
**daß** zwischen der Spreizcodiereinrichtung (4) und der Verwürfelungseinrichtung (6) eine Kanaladdiereinrichtung (5) angeordnet ist, um die Sendedaten der einzelnen physikalischen Kanäle (d1...d3, k1) nach der Codierung mit den Spreizcodes (c1...c4) zu einem I-Zweig und einem Q-Zweig zu kombinieren, wobei die über den I-Zweig und den Q-Zweig geführten Sendedaten separat der Verwürfelungseinrichtung (6) und den Signalaufbereitungsmitteln (7-9) zugeführt sind.

**18.** Vorrichtung nach Anspruch 16 und Anspruch 17,
**dadurch gekennzeichnet,**
**daß** der Überabtastungsfaktor der Überabtastungseinrichtung (3) derart gewählt ist, daß durch die nachfolgende Codierung der Spreizcodiereinrichtung (4) eine maximale Chiprate erzielbar ist.

**19.** Vorrichtung nach einem der Ansprüche 10-18,
**dadurch gekennzeichnet,**
**daß** die Vorrichtung (1) über eine Schnittstelleneinheit (14) mit einem Steuerbus (24) verbunden ist, über den von einer Prozessoreinrichtung (10) Steuerdaten zum Steuern des Betriebs der Vorrichtung (1) übertragen werden.

**20.** Vorrichtung nach Anspruch 19,
**dadurch gekennzeichnet,**
**daß** die Schnittstelleneinheit (14) mit der Vorrichtung (1) verbundene Speichermittel (17, 19, 21, 22, 25, 26, 29-31) zum Speichern der von der Prozessoreinrichtung (10) übertragenen Steuerdaten aufweist.

**21.** Vorrichtung nach Anspruch 19 oder 20,
**dadurch gekennzeichnet,**
**daß** die Vorrichtung (1) und die Schnittstelleneinheit (14) hardwaremäßig ausgestaltet sind, und
**daß** die Prozessoreinrichtung (10) firmwaremäßig ausgestaltet ist.

**Claims**

**1.** Method for producing spread-coded signals,
with transmission data being coded and band-spread using a spread code ($c_1....c_4$), and
with the band-spread transmission data being coded using a scrambling code ($s_i$, $s_q$), and then subjected to pulse forming,
**characterized in that** the band-spread and scrambled transmission data is furthermore subjected to frequency correction and DC offset and/or amplitude compensation, in which case, digital frequency offset correction is used for frequency correction, in which a rotation angle, which is used for the frequency correction, is represented as a linear combination of microrotations, and the microrotations are carried out using the CORDIC algorithm selectively, as a function of the frequency offset.

**2.** Method according to Claim 1,
**characterized**
**in that** RRC filtering with a roll-off factor of approximately 0.22 is used for pulse forming.

**3.** Method according to Claim 1 or 2,
**characterized**
**in that** the band-spread and scrambled transmission data is oversampled using a specific oversampling factor (M) during the pulse forming process.

**4.** Method according to Claim 3,
**characterized**
**in that** the oversampling factor (M) in the pulse forming process corresponds to the value four.

**5.** Method according to one of the preceding claims,
**characterized**
**in that** the DC offset compensation is carried out by addition of a specific DC offset compensation value to the transmission data,
and
**in that** the amplitude compensation is carried out by multiplication of the transmission data by a specific amplitude compensation value.

**6.** Method according to one of the preceding claims,
**characterized**
**in that**, before it is coded using the spread code ($c_1...c_4$), the transmission data is weighted by multiplication by a weighting factor ($w_1...w_4$), and is then oversampled.

**7.** Method according to Claim 6,
**characterized**

**in that** transmission data is present from a number of physical channels (d1...d3, k1),

**in that** the transmission data for each channel is weighted, oversampled and coded using a channel-specific spread code (c1...c4) separately, and

**in that**, after being coded using the spread code (c1...c4), the transmission data of the physical channels (d1...d3, k1) is combined to form an I branch and a Q branch, with the transmission data which is carried via the I branch and the Q branch then being scrambled, and being subjected to pulse forming, frequency correction and DC offset and/or amplitude compensation, separately.

8.  Method according to Claim 6 and Claim 7,
    **characterized**
    **in that** the oversampling is carried out with an oversampling factor such that the subsequent coding with the spread codes makes it possible to achieve a maximum chip rate.

9.  Method according to one of the preceding claims,
    **characterized**
    **in that** the method is carried out by a modulator (1), by means of which operating parameters are programmed via a control bus (24).

10. Apparatus for producing spread-coded signals, having a spread coding device (4) for coding transmission data to be transmitted using a spread code (c1...c4), and having a scrambling device (6) for scrambling the spread-coded transmission data with a scrambling code (si, sq), and with the transmission data output from the scrambling device (6) being supplied to signal preprocessing means (7-9) which comprise means for pulse forming,
    **characterized**
    **in that** the signal preprocessing means (7-9) furthermore comprise means for frequency correction and means for DC offset and/or amplitude compensation, the means for frequency correction comprising a digital frequency correction device (8) contains microrotation units ($33_0$..$33_{N-1}$), which are connected in series, can be driven selectively as a function of the frequency offset, and use the CORDIC algorithm to correct any frequency offset.

11. Apparatus according to Claim 10,
    **characterized**
    **in that** the means comprise an RRC filter device (7) for pulse forming.

12. Apparatus according to Claim 11,
    **characterized**
    **in that** the RRC filter device (7) has a roll-off factor of approximately 0.22.

13. Apparatus according to Claim 11 or 12,
    **characterized**
    **in that** the RRC filter device (7) oversamples the transmission data output from the scrambling device (6), during the pulse forming process, using a specific oversampling factor (M).

14. Apparatus according to one of Claims 10-13,
    **characterized**
    **in that** the means (7-9) comprise a DC offset and amplitude compensation device (7-9) for DC offset and/or amplitude compensation, which DC offset and amplitude compensation device (9) carries out the DC offset compensation by addition of a specific DC offset compensation value to the transmission data, and carries out the amplitude compensation by multiplication of the transmission data by a specific amplitude compensation value.

15. Apparatus according to one of Claims 10-14,
    **characterized**
    **in that** a weighting device (2) is connected upstream of the spread coding device (4), and weights the transmission data by multiplication by a weighting factor (wl...w4).

16. Apparatus according to Claim 15,
    **characterized**
    **in that** an oversampling device (3) is arranged between the weighting device (2) and the spread coding device (4) and oversamples the weighted transmission data output from the weighting device (2), using a specific sampling factor.

**17.** Apparatus according to Claim 15 or 16,
**characterized**
**in that** the apparatus (1) is supplied with the transmission data from a number of physical channels (d1...d3, k1),
**in that** the weighting device (2) weights the transmission data for each physical channel separately,
**in that** the spread coding device (4) codes the weighted transmission data of each physical channel (d1...d3, k1) separately using a channel-specific spread code (c1...c4) and
**in that** a channel adding device (5) is arranged between the spread coding device (4) and the scrambling device (6), in order to combine the transmission data of the individual physical channels (d1...d3, k1), after being coded using the spread codes (c1...c4), to form an I branch and a Q branch, with the transmission data which is carried via the I branch and the Q branch being supplied separately to the scrambling device (6) and to the signal processing means (7-9).

**18.** Apparatus according to Claim 16 and Claim 17,
**characterized**
**in that** the oversampling factor of the oversampling device (3) is chosen such that a maximum chip rate can be achieved by the subsequent coding by the spread coding device (4).

**19.** Apparatus according to one of Claims 10-18,
**characterized**
**in that** the apparatus (1) is connected via an interface unit (14) to a control bus (24), via which control data is transmitted from a processor device (10) in order to control the operation of the apparatus (1).

**20.** Apparatus according to Claim 19,
**characterized**
**in that** the interface unit (14) has memory means (17, 19, 21, 22, 25, 26, 29-31), which are connected to the apparatus (1), for storing the control data transmitted from the processor device (10).

**21.** Apparatus according to Claim 19 or 20,
**characterized**
**in that** the apparatus (1) and the interface unit (14) are in the form of hardware, and
**in that** the processor device (10) is in the form of firmware.

**Revendications**

**1.** Procédé de production de signaux codés par étalement,
des données d'émission étant soumises à un codage avec un code d'étalement (c1 à c4) et à un étalement de bande, et
les données d'émission à bande étalée étant soumises à un codage avec un code de cryptage (si, sq) puis à une mise en forme d'impulsions,
**caractérisé par le fait qu'**on soumet aussi les données d'émission à bande étalée et cryptées à une correction de fréquence et à une compensation de décalage DC et/ou d'amplitude, une élimination numérique de décalage de fréquence étant utilisée pour la correction de fréquence, élimination lors de laquelle un angle de rotation utilisé pour la correction de fréquence est représenté comme combinaison linéaire de microrotations et les microrotations sont effectuées sélectivement en fonction du décalage de fréquence en utilisant l'algorithme CORDIC.

**2.** Procédé selon la revendication 1,
**caractérisé par le fait que**, pour la mise en forme d'impulsions, on utilise un filtre RRC avec un facteur d'affaiblissement dit Roll-Off de 0,22 environ.

**3.** Procédé selon la revendication 1 ou 2,
**caractérisé par le fait que**, pendant la mise en forme d'impulsions, on suréchantillonne avec un certain facteur de suréchantillonnage (M) les données d'émission à bande étalée et cryptées.

**4.** Procédé selon la revendication 3,
**caractérisé par le fait que** le facteur de suréchantillonnage (M) de la mise en forme d'impulsions correspond à la valeur quatre.

**5.** Procédé selon l'une des revendications précédentes,
**caractérisé par le fait que**
la compensation de décalage DC s'effectue au moyen d'une addition d'une certaine valeur de compensation de décalage DC aux données d'émission, et
la compensation d'amplitude s'effectue au moyen d'une multiplication des données d'émission par une certaine valeur de compensation d'amplitude.

**6.** Procédé selon l'une des revendications précédentes,
**caractérisé par le fait qu'**on pondère les données d'émission avant leur codage avec le code d'étalement (c1 à c4) au moyen d'une multiplication par un facteur de pondération (w1 à w4) et on les suréchantillonne ensuite.

**7.** Procédé selon la revendication 6,
**caractérisé par le fait que**
il existe des données d'émission de plusieurs canaux physiques (d1 à d3, k1),
on pondère, suréchantillonne et code avec un code d'étalement (c1 à c4) spécifique au canal les données d'émission de chaque canal séparément, et
après le codage avec les codes d'étalement (c1 à c4), on combine les données d'émission des canaux physiques (d1 à d3, k1) en une branche I et une branche Q, les données d'émission envoyées via la branche I et la branche Q étant ensuite cryptées séparément et soumises séparément à la mise en forme d'impulsions, à la correction de fréquence et à la compensation de décalage DC et/ou d'amplitude.

**8.** Procédé selon la revendication 6 et la revendication 7,
**caractérisé par le fait que** le suréchantillonnage s'effectue avec un facteur de suréchantillonnage de manière à pouvoir obtenir un débit maximal par le codage consécutif avec les codes d'étalement.

**9.** Procédé selon l'une des revendications précédentes,
**caractérisé par le fait que** le procédé est exécuté par un modulateur (1) par lequel des paramètres de fonctionnement sont programmés par l'intermédiaire d'un bus de commande (24).

**10.** Dispositif de production de signaux codés par étalement,
avec un dispositif de codage par étalement (4) pour le codage de données d'émission à transmettre avec un code d'étalement (c1 à c4), et
avec un dispositif de cryptage (6) pour le cryptage des données d'émission codées par étalement avec un code de cryptage (si, sq), et les données d'émission fournies par le dispositif de cryptage (6) étant envoyées à des moyens de préparation de signal (7 à 9) qui comprennent des moyens pour la mise en forme d'impulsions,
**caractérisé par le fait que** les moyens de préparation de signal (7 à 9) comprennent aussi des moyens pour la correction de fréquence et des moyens pour la compensation de décalage DC et/ou d'amplitude, les moyens pour la correction de fréquence comprenant un dispositif numérique de correction de fréquence (8) qui contient un montage en série d'unités de microrotation ($33_0$ à $33_{N-1}$) qui sont commandables sélectivement en fonction du décalage de fréquence et qui éliminent un décalage de fréquence en utilisant l'algorithme CORDIC.

**11.** Dispositif selon la revendication 10,
**caractérisé par le fait que** les moyens pour la mise en forme d'impulsions comprennent un dispositif de filtrage RRC (7).

**12.** Dispositif selon la revendication 11,
**caractérisé par le fait que** le dispositif de filtrage RRC (7) a un facteur d'affaiblissement dit Roll-Off de 0,22 environ.

**13.** Dispositif selon la revendication 11 ou 12,
**caractérisé par le fait que**, pendant la mise en forme d'impulsions, le dispositif de filtrage RRC (7) suréchantillonne avec un certain facteur de suréchantillonnage (M) les données d'émission fournies par le dispositif de cryptage (6).

**14.** Dispositif selon l'une des revendications 10 à 13,
**caractérisé par le fait que** les moyens (7 à 9) pour la compensation de décalage DC et/ou d'amplitude comprennent un dispositif de compensation de décalage DC et d'amplitude (9) qui effectue la compensation de décalage DC au moyen d'une addition d'une certaine valeur de compensation de décalage DC aux données d'émission et qui effectue la compensation d'amplitude au moyen d'une multiplication des données d'émission par une certaine valeur de compensation d'amplitude.

15. Dispositif selon l'une des revendications 10 à 14,
**caractérisé par le fait qu'**un dispositif de pondération (2), qui pondère les données d'émission au moyen d'une multiplication par un facteur de pondération (w1 à w4), est monté en amont du dispositif de codage par étalement (4).

16. Dispositif selon la revendication 15,
**caractérisé par le fait qu'**il y a entre le dispositif de pondération (2) et le dispositif de codage par étalement (4) un dispositif de suréchantillonnage (3) qui suréchantillonne avec un certain facteur d'échantillonnage les données d'émission pondérées par le dispositif de pondération (2).

17. Dispositif selon la revendication 15 ou 16,
**caractérisé par le fait que**
les données d'émission de plusieurs canaux physiques (d1 à d3, k1) sont envoyées au dispositif (1),
le dispositif de pondération (2) pondère séparément les données d'émission de chaque canal physique,
le dispositif de codage par étalement (4) code séparément les données d'émission pondérées de chaque canal physique (d1 à d3, k1) avec un code d'étalement (c1 à c4) spécifique au canal, et
il y a entre le dispositif de codage par étalement (4) et le dispositif de cryptage (6) un dispositif d'addition de canal (5) pour combiner les données d'émission des différents canaux physiques (d1 à d3, k1), après le codage avec les codes d'étalement (c1 à c4), en une branche I et une branche Q, les données d'émission envoyées via la branche I et la branche Q étant envoyées séparément au dispositif de cryptage (6) et aux moyens de préparation de signal (7 à 9).

18. Dispositif selon la revendication 16 ou la revendication 17,
**caractérisé par le fait que** le facteur de suréchantillonnage du dispositif de suréchantillonnage (3) est choisi de manière à pouvoir obtenir un débit maximal par le codage consécutif du dispositif de codage par étalement (4).

19. Dispositif selon l'une des revendications 10 à 18,
**caractérisé par le fait que** le dispositif (1) est relié par l'intermédiaire d'une unité formant interface (14) à un bus de commande (24) par l'intermédiaire duquel des données de commande sont transmises par un dispositif à processeur (10) pour la commande du fonctionnement du dispositif (1).

20. Dispositif selon la revendication 19,
**caractérisé par le fait que** l'unité formant interface (14) comporte des moyens formant mémoire (17, 19, 21, 22, 25, 26, 29 à 31) qui sont reliés au dispositif (1) et qui sont destinés à mémoriser les données de commande transmises par le dispositif à processeur (10).

21. Dispositif selon la revendication 19 ou 20,
**caractérisé par le fait que**
le dispositif (1) et l'unité formant interface (14) sont conçus sous forme matérielle, et
le dispositif à processeur (10) est conçu sous forme de microprogramme.

FIG 1

EP 1 216 516 B1

# FIG 2

# FIG 4

$C_{4,1}=(1,1,1,1)$

$C_{2,1}=(1,1)$

$C_{4,2}=(1,1,-1,-1)$

$C_{1,1}=(1)$

$C_{4,3}=(1,-1,1,-1)$

$C_{2,2}=(1,1)$

$C_{4,4}=(1,-1,-1,1)$

SF = 1     SF = 2     SF = 4

FIG 3

EP 1 216 516 B1

EP 1 216 516 B1

FIG 5

si

sq

23

XOR: ⊗

18

# FIG 6

# FIG 7

| | | | | | | | | | | | | | | | | |
|---|---|---|---|---|---|---|---|---|---|---|---|---|---|---|---|---|
| 1 | 1 | 1 | 1 | -1 | -1 | -1 | 1 | -1 | -1 | 1 | 1 | -1 | 1 | -1 | 1 | 1 |
| 2 | -1 | 1 | -1 | -1 | 1 | 1 | 1 | -1 | 1 | 1 | 1 | -1 | -1 | 1 | -1 | 1 |
| 3 | 1 | -1 | 1 | 1 | 1 | -1 | 1 | 1 | -1 | 1 | 1 | 1 | -1 | 1 | -1 | 1 |
| 4 | -1 | 1 | -1 | 1 | -1 | -1 | -1 | -1 | -1 | 1 | -1 | 1 | -1 | 1 | 1 | 1 |
| 5 | 1 | -1 | -1 | -1 | -1 | 1 | 1 | -1 | -1 | -1 | -1 | 1 | -1 | -1 | -1 | 1 |
| 6 | -1 | -1 | 1 | -1 | 1 | -1 | 1 | -1 | 1 | -1 | -1 | 1 | 1 | 1 | 1 | 1 |
| 7 | -1 | 1 | 1 | 1 | -1 | -1 | 1 | 1 | 1 | -1 | -1 | -1 | -1 | -1 | -1 | 1 |
| 8 | 1 | 1 | -1 | -1 | -1 | -1 | -1 | 1 | 1 | -1 | 1 | 1 | 1 | 1 | -1 | 1 |
| 9 | 1 | -1 | 1 | -1 | -1 | 1 | -1 | 1 | 1 | 1 | -1 | -1 | -1 | 1 | 1 | 1 |
| 10 | -1 | 1 | 1 | -1 | 1 | 1 | -1 | 1 | -1 | -1 | 1 | 1 | -1 | -1 | 1 | 1 |
| 11 | 1 | 1 | 1 | 1 | 1 | 1 | -1 | -1 | 1 | 1 | -1 | 1 | 1 | -1 | -1 | 1 |
| 12 | 1 | 1 | -1 | 1 | 1 | 1 | 1 | 1 | -1 | -1 | -1 | -1 | 1 | 1 | 1 | 1 |
| 13 | 1 | -1 | -1 | 1 | 1 | -1 | -1 | -1 | 1 | -1 | 1 | -1 | -1 | -1 | 1 | 1 |
| 14 | -1 | -1 | -1 | 1 | -1 | 1 | 1 | 1 | 1 | 1 | 1 | 1 | 1 | -1 | 1 | 1 |
| 15 | -1 | -1 | -1 | -1 | 1 | -1 | -1 | 1 | -1 | 1 | -1 | -1 | 1 | -1 | -1 | 1 |
| 16 | -1 | -1 | 1 | 1 | -1 | 1 | -1 | -1 | -1 | -1 | 1 | -1 | 1 | 1 | -1 | 1 |

# FIG 8